(19) Europäisches Patentamt
European Patent Office
Office européen des brevets

(11) EP 0 824 110 A1

(12) **DEMANDE DE BREVET EUROPEEN**

(43) Date de publication:
**18.02.1998 Bulletin 1998/08**

(51) Int Cl.[6]: **C08F 4/00**

(21) Numéro de dépôt: **97400600.9**

(22) Date de dépôt: **18.03.1997**

(84) Etats contractants désignés:
**BE CH DE ES FR GB IT LI NL SE**

(30) Priorité: **12.08.1996 FR 9610124**

(71) Demandeur: **ELF ATOCHEM S.A.**
**92800 Puteaux (FR)**

(72) Inventeurs:
- **Lecomte, Philippe**
**5100 Jambes (BE)**
- **Dubois, Philippe**
**4260 Ciplet (Braives) (BE)**
- **Jerome, Robert**
**4180 Tilff (BE)**
- **Teyssie, Philippe**
**4121 Neuville en Condroz (BE)**
- **Senninger, Thierry**
**57700 Hyange (FR)**

(74) Mandataire: **Chaillot, Geneviève**
**Cabinet CHAILLOT,**
**16-20, avenue de L'Agent Sarre,**
**B.P. 74**
**92703 Colombes Cédex (FR)**

(54) **Procédé de polymérisation ou copolymérisation radicalaire contrôlée de monoméres (méth)acryliques et vinyliques et (co)polymères obtenus**

(57) Ce procédé est caractérisé par le fait que l'on polymérise ou copolymérise en masse, solution, émulsion ou suspension, à une température pouvant descendre jusqu'à 0°C, au moins un desdits monomères en présence d'un système d'amorçage comprenant : au moins un composé générateur de radicaux autre que le bromofluorène ; et au moins un catalyseur constitué par un complexe du palladium au degré d'oxydation 0, représenté par la formule suivante (I) : $Pd(0)L^1L^2L^3L^4$ dans laquelle $L^1$, $L^2$, $L^3$ et $L^4$, identiques ou différents, représentent chacun un ligand, pouvant être un ligand chiral, qui est choisi parmi PRR'R", P(OR) (OR') (OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué, au moins deux de ces ligands pouvant être reliés entre eux par un ou plusieurs radicaux bivalents.

EP 0 824 110 A1

## Description

La présente invention est relative à un procédé de polymérisation ou copolymérisation radicalaire contrôlée de monomères (méth)acryliques et/ou vinyliques (par exemple, vinylaromatiques) ainsi qu'aux polymères ou copolymères ainsi obtenus.

La polymérisation radicalaire constitue l'un des processus de polymérisation les plus exploités industriellement en raison de la variété des monomères polymérisables (70% des monomères commerciaux), de la facilité de mise en oeuvre et des procédés de synthèse utilisés (émulsion, suspension, masse, solution). Toutefois, il est difficile en polymérisation radicalaire classique de contrôler la dimension des chaînes polymères et la distribution des masses moléculaires. Les polymères ainsi préparés contiennent des chaînes de très grandes et très faibles masses (polydispersité large), ce qui conduit à des matériaux aux propriétés non contrôlées. De plus, l'addition séquencée de monomère conduit à un mélange d'homopolymères.

Les techniques de polymérisation anionique et cationique, quant à elles, permettent un contrôle correct du processus, mais les conditions de réaction qu'exigent ces méthodes de polymérisation ne sont pas toujours réalisables à l'échelle industrielle. De plus, de nombreux monomères ne peuvent être polymérisés par ces techniques.

Bien qu'il existe à ce jour quelques exemples de polymérisation radicalaire contrôlée de monomères (méth)acryliques ou vinylaromatiques, utilisant notamment le complexe $RuCl_2(PPh_3)_3$ (P = phosphore et Ph = phényle)associé à un alcoolate d'aluminium et le complexe CuCl/2,2'-bipyridine, ces systèmes catalytiques ne se sont révélés actifs en polymérisation qu'à des températures supérieures à 100°C en l'absence d'activateurs. Or, lorsque la température est élevée, l'autoamorçage thermique se produit, ce qui conduit, notamment, à une diminution du contrôle de la polymérisation.

La copolymérisation simultanée du styrène et du méthacrylate de méthyle a été effectuée par le palladium tétrakis (triphénylphosphine) $Pd(PPh_3)_4$ en présence de bromofluorène à température ambiante. Les taux de conversion en polymère sont cependant très faibles et il n'est pas possible de décrire cette copolymérisation comme vivante à ce taux de conversion extrêmement bas (2%) (J.K. Stille, K.S.Y. Lau *J. Amer, Chem. Soc.* 98, 5841 (1976)).

Otsu s'est beaucoup intéressé à la polymérisation de styrène, de méthacrylate de méthyle ou de butadiène par des systèmes comprenant un métal activé au degré d'oxydation 0 et un composé halogéné(Otsu, T. *Polym. Lett.* 1967, *5*, 835., *Polym. Lett.* 1967, *5*, 697 ou *J. Polym. Sci. Part A1* 1970, *8*, 785 ou *J. Polym. Sci. Part A1* 1968, *6*, 3075 ou *J. Macromol. Sci. Chem.* 1969, A3(2),177 ou *J. Polym. Sci. Part A1* 1969, *7*, 387 ou *J. Polym. Sci. Part A1* 1969, *7*, 3269). Les métaux utilisés peuvent être variés : il peut s'agir de Ni, Pd, Co, Fe, Cu, Pt, Rh. Les meilleurs résultats de polymérisation sont obtenus lorsque le métal est présent sous une forme activée. Par exemple, dans le cas du nickel, il est nécessaire d'utiliser du nickel de Raney ou du nickel fraîchement réduit par un courant d'hydrogène. Dans le cas du palladium (*J. Polym. Sci. Part A1* 1968, *6*, 3075), le métal est déposé sur du charbon actif. Engagé en polymérisation du méthacrylate de méthyle, à 60°C, le palladium métallique sur charbon donne un rendement de la polymérisation qui ne dépasse pas 18,7% au bout de 3 h. Dans tous les articles cités, il n'est pas fait mention de caractère vivant de la polymérisation.

Plus tard, Otsu a réemployé des systèmes utilisant du nickel réduit et un halogénure d'alkyle pour polymériser le méthacrylate de méthyle ou le styrène, ou pour obtenir des copolymères séquencés des deux monomères précédents (voir : Otsu, T. *Chem. Express* 1990, *5*, 801 ou Otsu, T. *Mem. Fac. Eng., Osaka City Univ.* 1989, *30*, 103). Il note que ce type de système est vivant, mais aucun indice de polymolécularité n'est donné. De plus, dans le cas de polymérisation de styrène, des distributions bimodales sont obtenues. Cette bimodalité est également notée dans le cas des copolymères styrène - méthacrylate de méthyle (voir Otsu, T. *Mem. Fac. Eng., Osaka City Univ.* 1989, *30*, 103).

D'autres complexes du nickel au degré (0), comme $Ni[P(OR)_3]_4$ (Hargreaves, K. *J. Polym. Sci. Polym. Chem.* 26, 465 (1988)) ou $Ni(CO)_4$ (Bamford, C.H. *Trans. Farad. Soc* 66, 2598 (1970)) ont été testés en présence d'halogénures d'alkyle comme initiateurs de monomères vinyliques, mais il n'est pas fait mention de caractère vivant.

En outre, pour la polymérisation en émulsion ou en suspension, il est connu que la plupart des procédés sont mis en oeuvre en milieu aqueux et, donc, il est nécessaire de travailler à des températures inférieures à 100°C pour assurer la stabilité de ces émulsions ou suspensions.

La température peut être, certes, abaissée, mais la présence d'acides de Lewis est alors nécessaire et cela implique de travailler en milieu anhydre.

Il est aussi nécessaire que le catalyseur ne soit pas dégradé par l'eau dans les conditions normales de polymérisation.

Le but de la présente invention consiste, par conséquent, à remédier aux inconvénients précités et à réaliser des polymérisations radicalaires qui permettent un contrôle identique aux polymérisations ioniques et coordinatives dans des conditions de synthèse acceptables industriellement et qui, par conséquent, permettent de synthétiser des homopolymères et des copolymères statistiques ou séquencés purs, parfaitement définis, dont la longueur est prédéterminée, lesquels n'ont pu jusque là être synthétisés.

D'une façon générale, le but de l'invention est de présenter un procédé de polymérisation ou copolymérisation

radicalaire de monomères (méth)acryliques et/ou vinyliques permettant de contrôler la croissance des chaînes de polymères, le processus de polymérisation s'effectuant en masse, solution, émulsion ou suspension jusqu'à ce que la totalité du ou des monomères précédents soit consommée.

Pour cela, il est nécessaire d'éviter ou tout au moins de limiter les réactions de terminaison par recombinaison et dismutation et de favoriser un amorçage rapide de la polymérisation ou copolymérisation.

C'est ainsi qu'un des buts essentiels de l'invention est de proposer des catalyseurs et des amorceurs qui permettent, sans nécessiter une modification appréciable de la technologie classique, d'obtenir, dans des conditions industriellement et économiquement valables, des polymères et copolymères répondant aux exigences commerciales de régiosélectivité, de stéréosélectivité, de contrôle des masses moléculaires et de leurs distributions.

A cet effet, on prévoit, suivant la présente invention, un procédé de polymérisation ou copolymérisation radicalaire contrôlée de monomères (méth)acryliques et/ou vinyliques, caractérisé par le fait que l'on polymérise ou copolymérise en masse, solution, émulsion ou suspension, à une température pouvant descendre jusqu'à 0°C, au moins un desdits monomères en présence d'un système d'amorçage comprenant :

- au moins un composé générateur de radicaux autre que le bromofluorène ; et
- au moins un catalyseur constitué par un complexe du palladium au degré d'oxydation 0, représenté par la formule suivante (I) :

$$Pd(0)L^1L^2L^3L^4$$

dans laquelle $L^1$, $L^2$, $L^3$ et $L^4$, identiques ou différents, représentent chacun un ligand, pouvant être un ligand chiral, qui est choisi parmi PRR'R", P(OR) (OR') (OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué, au moins deux de ces ligands pouvant être reliés entre eux par un ou plusieurs radicaux bivalents. Ces radicaux bivalents peuvent être, par exemple, un radical alkylène, tel que les radicaux méthylène ($-CH_2-$) éthylène ($-CH_2CH_2-$), triméthylène ($-CH_2CH_2CH_2-$), lesquels peuvent eux-mêmes être substitués par exemple par un groupe alkyle en $C_1$-$C_{14}$ ou aryle.

Un ligand pourrait présenter une chiralité dans sa structure, afin d'obtenir un polymère stéréorégulier.

En particulier, $L^1$, $L^2$, $L^3$ et $L^4$ représentent chacun une phosphine PRR'R", R, R' et R" représentant chacun indépendamment un groupe alkyle en $C_1$-$C_{14}$ pouvant être substitué par $SO_3^-$, COOH, alcoxy, alkyl-S-, ou un groupe aromatique pouvant être substitué par au moins un substituant choisi notamment parmi halogène, tel que Cl, Br, F, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

Comme exemples de groupes alkyle éventuellement substitués entrant dans la définition de R, R', R", on peut citer méthyle, éthyle, n-propyle, n-butyle, $NCCH_2CH_2-$, et comme exemples de groupes aromatiques, éventuellement substitués, on peut citer phényle, 1-naphtyle, p-$FC_6H_4$, m-$ClC_6H_4$, o-$CH_3OC_6H_4$, p-$CH_3OC_6H_4$, p-$CF_3C_6H_4$, 2,4,6-triméthoxyphényle, $C_6F_5$, o-$CH_3C_6H_4$, p-$CH_3C_6H_4$, m-$CH_3C_6H_4$. Comme ligands correspondants, on peut citer en particulier la triphénylphosphine et la tris(4-méthoxyphényl)phosphine.

On peut également citer les monophosphines porteuses de groupements destinés à les rendre solubles, telles que le triphénylphosphine monosulfonate de sodium (TPPMS) ou le triphénylphosphine trisulfonate de sodium (TPPTS) :

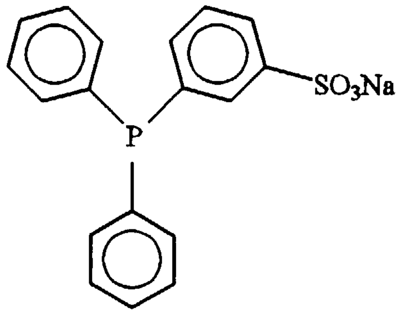

TPPMS

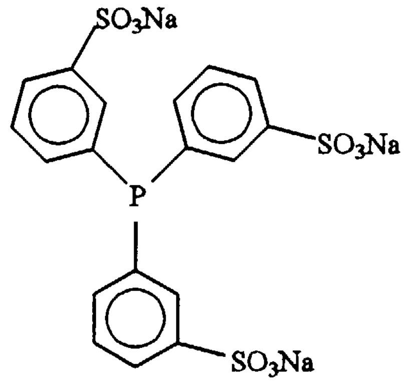

TPPTS

et les monophosphines chirales, telles que la (S)-(+)-néomenthyldiphénylphosphine ((S)-NMDPP) (CAS Number = 43077-29-8).

On peut également citer O-SMe-$C_6H_4$-P-$Ph_2$, ainsi que O-SMe-$C_6H_4$-PPh-$C_6H_4$-O-SMe.

Comme polyphosphines, on peut mentionner les composés de la formule générale suivante :

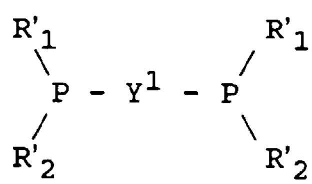

dans laquelle :

- $R'_1$ et $R'_2$ représentent chacun indépendamment alkyle, alkyle substitué, alkyle portant une fonction -COOH ou -$NH_2$, aryle, aryle substitué, tel que $C_6H_5$ ;
- $Y^1$ représente :
  - alkylène ; alkylène substitué ;
  - arylène ; arylène substitué ;
  - binaphtyle ;
  - 1,2-cyclopentyle ;
  - -$(CR'_3R'_4)_n$-Z-$(CR'_5R'_6)_m$-, avec $R'_3$ à $R_6$ représentant chacun indépendamment H ou alkyle ; n et m représentant chacun un nombre entier de 0 à 3; et et

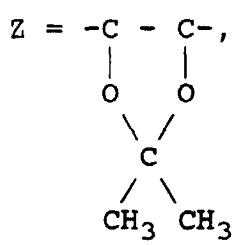

pyridile ou phénylène ;
  - -$[(CR'_7R'_8)_p$-$T]_q$-$(CR'_9R'_{10})_r$, avec $R'_7$ à $R'_{10}$ représentant chacun indépendamment H ou alkyle ; p, q et r représentant un nombre entier de 1 à 5, et T = -O- ; -S- ; -$NR'_{11}$- ; -$PR'_{12}$ ($R'_{11}$, $R'_{12}$ = alkyle en $C_1$-$C_{14}$, aryle) ;

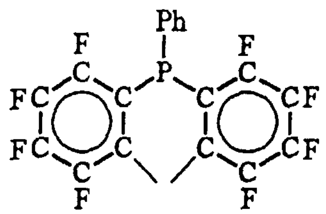 ;

et

- $-C_6H_5-CH=CH-C_6H_5-$.

On peut citer en particulier :

- les diphosphines telles que, par exemple :
  - $Me_2PCH_2CH_2PMe_2$
  - $Ph_2PCH_2PPh_2$
  - $Ph_2PCH_2CH_2PPh_2$
  - $Ph_2P(CH_2)_nPPh_2$, n = 3 à 14
  - $(C_6F_5)_2PCH_2CH_2P(C_6F_5)_2$
  - les diphosphines chirales capables d'apporter une stéréospécificité à la polymérisation, comme :
- le (4R,5R)-(-)-O-isopropylidène-2,3-dihydroxy-1,4-bis(diphenylphosphino)butane ((R,R)-DIOP) (CAS Number = 37002-48-5) ;
- le (4S,5S)-(+)-O-isopropylidène-2,3-dihydroxy-1,4-bis(diphénylphosphino)butane ((S,S)-DIOP) ;
- le (R)-(+)-2,2'-bis(diphénylphosphino)-1,1'-binaphtyl ((R)-BINAP) (CAS Number = 76189-55-4) ;
- le (S)-(-)-2,2'-bis(diphénylphosphino)-1,1'-binaphtyl ((S)-BINAP) (CAS Number 76189-56-5);
- le (2S,3S)-(-)-bis(diphénylphosphino)butane ((S,S)-CHIRAPHOS) (CAS Number = 648976-28-2);
- le (2S,4S)-(-)-2,4-bis(diphénylphosphino)pentane ((S,S)-BDPP) (CAS Number = 77876-39-2) ;
- le R-(+)-1,2-bis(diphénylphosphino)propane ((R)-PROPHOS) (CAS Number = 67884-32-6) ;
- les diphosphines représentées par les formules :

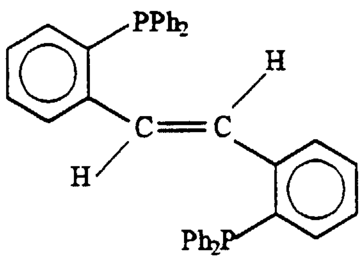

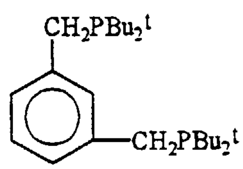

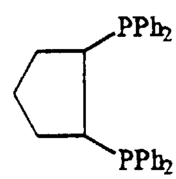

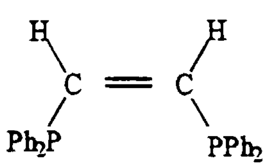

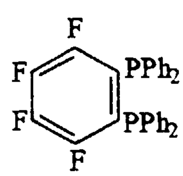

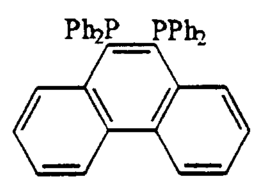

- les diphosphines contenant des hétéroatomes, comme par exemple :

- $Ph_2PCH_2CH_2OCH_2CH_2PPh_2$ ;
- $Ph_2PCH_2CH_2OCH_2CH_2OCH_2CH_2PPh_2$ ;
- $Ph(CH_2COOH)PCH_2CH_2P(CH_2COOH)Ph$ ;

- $Ph_2P(CH_2)_nS(CH_2)_mS(CH_2)_pPPh_2$ ;
  (n, m et p représentant chacun indépendamment 2 ou 3) ;
- les diphosphines de formule :

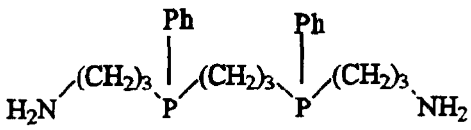

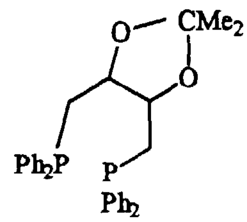

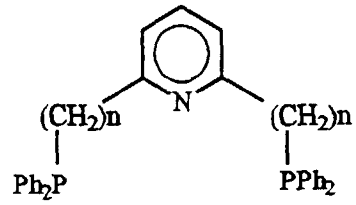

- les triphosphines, comme celles des formules :

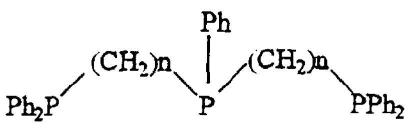

n = 2, 3

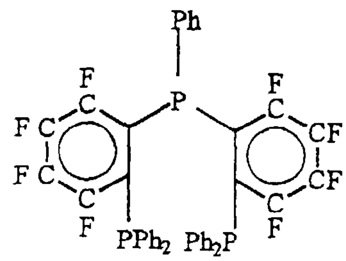

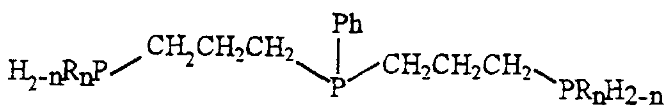

R = Me, Ph
n = 0, 1, 2

avec $PPh_2$ pouvant être remplacé par PPhMe ou $PMe_2$.

Les ligands peuvent également être choisis dans la famille des phosphites P(OR) (OR') (OR"), avec par exemple R, R' et R" choisis indépendamment parmi n-butyle, isopropyle, éthyle, méthyle, $(CH_3)_3CCH_2$-, $C_6H_4$.

Le complexe de formule (I) peut être introduit directement dans le milieu réactionnel, ou bien il peut être formé in situ dans ce milieu, à partir d'un sel de palladium (II) et des ligands $L^1$, $L^2$, $L^3$ et $L^4$, ou à partir d'un complexe du palladium (II) formé avec une partie des ligands $L^1$ $L^2$ $L^3$ $L^4$ et de l'autre partie desdits ligands.

On peut choisir le sel de palladium (II) parmi $PdCl_2$, $PdBr_2$, $PdI_2$, et les sels de palladium et d'acides organiques, tels que Pd(OAc)2, et le complexe de palladium (II), parmi ceux de formule :

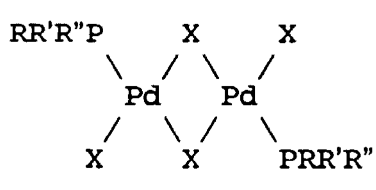

où :

- R, R' et R" sont tels que définis ci-dessus ; et
- X représente un halogène, tel que Cl, Br.

Le catalyseur ne jouant pas le rôle de générateur de radicaux, il est donc indispensable de lui associer un tel composé. La réaction entre le générateur de radicaux et l'espèce du palladium décrite ci-avant donne lieu à une polymérisation contrôlée. On pourra ainsi poursuivre une polymérisation en ajoutant une nouvelle dose d'un monomère, éventuellement différent du premier. Si ce monomère est différent du premier, et qu'il est ajouté après épuisement du premier, on obtiendra un copolymère séquencé. S'il est ajouté en même temps que le premier, la copolymérisation sera aléatoire et on obtiendra un copolymère statistique. Pour la préparation de copolymères séquencés, on peut envisager l'utilisation d'un mélange de deux ou plusieurs catalyseurs, la seconde dose de monomère étant additionnée en présence d'un catalyseur différent mais toujours du type tel que défini dans le cadre de la présente invention, ce catalyseur devant alors être plus actif que celui déjà présent. C'est ainsi que l'on peut répéter cette opération à chaque nouvelle séquence que l'on veut préparer.

Suivant l'invention, des composés générateurs de radicaux qui conviennent particulièrement bien sont des composés halogénés activés par des effets électroniques donneurs et/ou récepteurs sur l'atome de carbone en position $\alpha$ du ou des halogènes dudit composé, notamment ceux indiqués ci-après :

Lorsque le générateur de radicaux est monofonctionnel, il peut être choisi dans les classes des composés suivants :

(a) les dérivés de formule :

$$CYZ_3$$

où :

- Y = Cl, Br, I, F ou H ; et
- Z = Cl ou Br,

par exemple, le tétrachlorure de carbone, le chloroforme, le tétrabromure de carbone et le bromotrichlorométhane ;

(b) les dérivés de formule :

$$R^1CCl_3$$

où $R^1$ représente un groupe phényle ; benzyle ; benzoyle ; alcoxycarbonyle ; 1-chloro 1-éthoxycarbonyléthyle ; $R^2CO$ avec $R^2$ représentant alkyle en $C_1$-$C_{14}$ ou aryle ; alkyle ; mésityle ; trifluorométhyle ; ou nitro, comme, par exemple, l'$\alpha,\alpha,\alpha$-trichlorotoluène, l'$\alpha,\alpha,\alpha$-trichloroacétophénone, le trichloroacétate d'éthyle, le 1,1,1-trichloroéthane, le 1,1,1-trichloro-2-phényléthane, le trichlorométhylmésitylène, le 1,1,1-trichloro-2,2,2-trifluoroéthane, le trichloronitrométhane et le 2-chloro 2-trichlorométhyl propionate de méthyle ;

(c) les dérivés de formule :

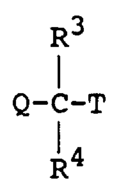

dans laquelle :

- Q représente un atome de chlore ou de brome ou un groupe acétate

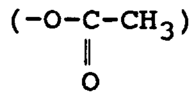

ou trifluoroacétate

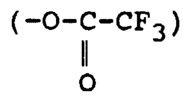

ou triflate ($O_3SCF_3$) ;

- $R^3$ représente un atome d'hydrogène, un groupe alkyle en $C_1$-$C_{14}$ ou un groupe aromatique, par exemple du type benzénique, anthracénique ou naphtalénique, ou un groupe $-CH_2OH$
- T représente un groupe

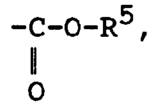

avec $R^5$ représentant chacun hydrogène ou un groupe alkyle ou aromatique; un groupe CN ; un groupe

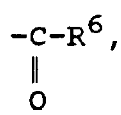

avec $R^6$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^7CO$, avec $R^7$ représentant alkyle en $C_1$-$C_{14}$ ou aryle ;

- $R^4$ représente un groupe entrant dans les définitions de $R^3$ ou de Q ou un groupe fonctionnel tel qu'hydroxyle, nitro, amino substitué ou non, alcoxy en $C_1$-$C_{14}$, acyle, acide carboxylique, ester ;

comme, par exemple, l'acide 2-bromopropionique, l'acide 2-bromobutanoique, l'acide 2-bromohexanoique, le bromoacétonitrile, le 2-bromopropionitrile, la 2-bromoisobutyrophénone et le chloroacétylisocyanate ; le 2-bromo-2-nitro-1,3-propanediol et le 2-bromo-2-nitropropane ;

(d) les composés lactones ou lactames halogénés en a, comme l'α-bromo-α-méthyl-y-butyrolactone ou α-bromo-γ-valérolactone, le lauryllactame halogéné ou le caprolactame halogéné ;

(e) les N-halosuccinimides, comme le N-bromosuccinimide, et les N-halophtalimides, comme le N-bromophtalimide ;

(f) les halogénures (chlorures et bromures) d'alkylsulfonyle, le reste alkyle étant notamment en $C_1$-$C_{14}$, ainsi que les halogénures d'arylène sulfonyle, tels que ceux de formule :

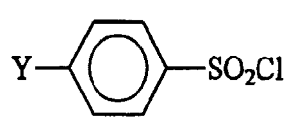
,

où Y = Me, Cl, OMe, $NO_2$

(g) les composés de formule :

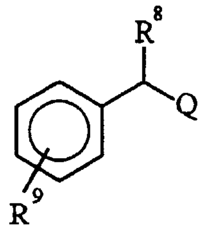

où :

- $R^8$ représente un atome d'hydrogène, un groupe alkyle en $C_1$-$C_{14}$ ou un groupe acide carboxylique, ester, nitrile ou cétone ;
- $R^9$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ($SO_3^-Na^+$ ou $K^+$) ; et
- Q a la signification donnée précédemment ;

(h) les composés de formule :

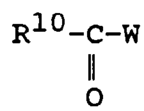

où :

- $R^{10}$ représente alkyle en $C_1$-$C_{14}$ ou aryle ; et
- W représente un halogène, préférentiellement Cl et Br, ou un pseudohalogénure tel que $N_3$, SCN ;

(i) les composés de formule :

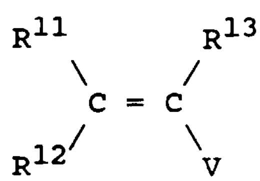

où :

- $R^{11}$, $R^{12}$ et $R^{13}$ représentent chacun indépendamment alkyle en $C_1$-$C_{14}$ ou aryle ; et
- V représente un halogène, tel que préférentiellement Cl, Br, ou également un groupement acétate, trifluoroacétate, triflate ; et

(j) les halogénures aromatiques de formule :

Ar - U

où :

- Ar représente un groupement aromatique tel que $C_6H_5$- pouvant être substitué en position méta, ortho ou para par un groupement électroattracteur, tel que $NO_2$, $NO_3$, $SO_3$, ou électrodonneur, tel qu'un groupement alkyle ou un groupement -ONa ; et
- U représente un halogène, tel que préférentiellement Cl ou Br.

On peut également envisager l'utilisation de générateurs de radicaux bifonctionnels et de fonctionnalité supérieure ; les générateurs de radicaux bifonctionnels peuvent être constitués de deux générateurs de radicaux monofonctionnels $A^1$ et $A^2$ des classes (c) à (j) précitées, reliés par une chaîne d'unités méthylène ou par un cycle benzénique, tels que représentés par les formules :
$A^1-(CH_2)_p-A^2$ avec p entier de 1 à 14 et

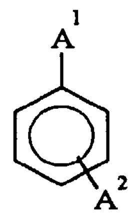

On peut par exemple citer l'amorceur bifonctionnel de formule :

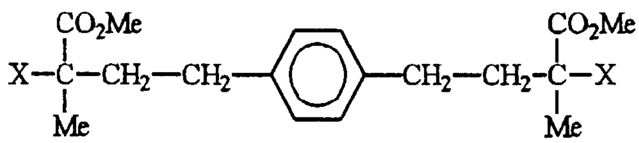

Les composés générateurs de radicaux multifonctionnels peuvent être constitués d'au moins trois groupements générateurs de radicaux monofonctionnels $A^1$, $A^2$ et A3 des classes (c) à (j) précitées reliés entre eux par un cycle benzénique, comme, par exemple, ceux répondant à la formule :

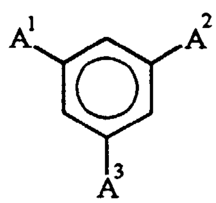

D'autres composés générateurs de radicaux bifonctionnels sont les tri- ou tétrahalométhanes et les dérivés trichlorométhylés des classes (a) et (b) précitées, ces mêmes tri- et tétrahalométhanes pouvant également servir de composés générateurs de radicaux multifonctionnels.

On pourrait également utiliser d'autres composés générateurs de radicaux difonctionnels que ceux représentés ci-dessus, notamment ceux de la famille des anhydrides acétiques comme l'anhydride d'acide chloroacétique et l'anhydride d'acide chlorodifluoroacétique ainsi que des générateurs de radicaux de polymérisation radicalaire classique comme les peroxydes et les composés azoïques, des exemples représentatifs de ces derniers étant notamment respectivement le peroxyde de dibenzoyle et le 2,2'-azo-bis-isobutyronitrile.

On citera comme composés générateurs de radicaux particulièrement avantageux le tétrachlorure de carbone, le trichloroacétate d'éthyle, le bromure d'isobutyrate d'éthyle, le 2-chloro 2-trichlorométhyl propionate de méthyle. On peut utiliser, notamment, pour la polymérisation en émulsion, le trichloroacétate de sodium, le trichloroacétate de potassium, le chlorodifluoroacétate de sodium, le chlorodifluoroacétate de potassium et le chloroacétate de sodium.

La polymérisation selon l'invention peut avantageusement être conduite en présence d'un activateur qui peut être soit une base (OH, $Et_3N$, $CH_3CO_2^-$, $CF_3CO_2^-$), soit un acide de Lewis, comme par exemple les alcoolates d'aluminium tels que Me-Al-$(OAr)_2$ (cf présent exemple 3) ou $Al(OiPr)_3$. Le rôle de l'activateur est d'augmenter la vitesse de polymérisation (par exemple, dans le cas des acides de Lewis après coordination de l'acide de Lewis sur la dernière liaison C=O de la chaîne de poly(méthacrylate de méthyle) en croissance) ou d'améliorer le contrôle de la polymérisation (par exemple après ajout d'une base dont le rôle est de maintenir le palladium au degré d'oxydation 0 ou de réduire le palladium en palladium au degré 0).

La longueur des chaînes polymères étant préalablement déterminée par le rapport molaire du ou des monomères

(méth)acryliques ou vinyliques sur le ou les composés générateurs de radicaux, ce rapport est de 1 - 100 000, avantageusement de 50 à 2 000. Quant au rapport molaire du palladium sur le (ou les) générateur(s) de radicaux, il est généralement compris entre 0,01 et 100, avantageusement entre 0,05 et 20. Le rapport molaire du sel de palladium (II) sur le ligand, dans le cas de la formation du composé (I) in situ, peut varier entre 0,05 et 20.

Le paramètre de la température de polymérisation ou de copolymérisation est un point extrêmement important qui distingue le procédé de l'invention des procédés utilisant des systèmes catalytiques actuellement connus. Avec les procédés catalytiques connus, il se produit une inactivité du catalyseur en dessous d'une température qui se situe autour de 100°C en l'absence d'activateur. C'est ainsi qu'à 50°C, il ne se produit pas de polymérisation avec le catalyseur CuCl/2,2-bipyridine, et, en l'absence d'activateur, avec le catalyseur $RuCl_2(PPh_3)_3$, et cela même après plusieurs jours de réaction. On peut parler, dans le cadre de la présente invention, de conditions réactionnelles douces car il est très peu courant que des catalyseurs en synthèse restent actifs à des températures pouvant descendre jusqu'à 0°C à la pression atmosphérique. Cet avantage est extrêmement important d'autant plus que le stéréocontrôle de la réaction de polymérisation ou copolymérisation est favorisé par un abaissement de la température. D'autre part, les conditions réactionnelles en masse (c'est-à-dire dans le ou les monomères purs) et en solution, émulsion ou suspension sont d'une manière générale identiques. La température et tous les rapports molaires peuvent être les mêmes quel que soit le procédé de réaction utilisé. La possibilité de travailler, sans risques, dans le monomère pur constitue bien entendu une amélioration au regard des polymérisations radicalaires classiques. La concentration en centres actifs étant constante tout au long de la réaction de polymérisation ou copolymérisation en raison de l'absence de réactions de terminaison, l'exothermie importante et brutale (ou effet Trommsdorf) des polymérisations radicalaires classiques ne se produit pas. Pour le procédé industriel, ceci constitue bien entendu un progrès important puisque les polymérisations ou copolymérisations menées dans ces conditions ne risquent plus de devenir totalement incontrôlées. D'une manière générale, la polymérisation ou copolymérisation sera effectuée à une température de 0°C à 130°C, avantageusement entre 40 et 90°C sans aucune perte d'activité du catalyseur.

Les systèmes d'amorçage selon l'invention étant compatibles avec l'eau, on pourra donc effectuer les réactions de polymérisation ou copolymérisation en milieu aqueux, en présence ou non d'émulsifiants. C'est ainsi que les polymérisations en milieu aqueux sont effectuées soit en suspension (composé générateur de radicaux insoluble dans l'eau) soit en émulsion (composé générateur de radicaux soluble dans l'eau) en présence d'au moins un émulsifiant. Les émulsifiants peuvent être des surfactants anioniques, tels que le dodécylbenzène sulfonate de sodium, le dodécyl sulfate de sodium, le lauryl sulfate de sodium et leurs mélanges, ou du type neutre comme les esters de glycol, les esters de sorbitane et de polyéthylène glycol tels que le monolaurate, le monopalmitate, le monooléate et le stéarate de sorbitane et de polyéthylène glycol, les esters d'acides gras et de polyéthylène glycol tels que le stéarate de polyéthylène glycol et les éthers d'alcools gras et de polyéthylène glycol tels que les éthers stéarylique et cétylique de polyéthylène glycol.

Les réactions de polymérisation ou copolymérisation de l'invention, lorsqu'elles sont menées en solution, peuvent bien entendu également se faire en présence d'un solvant organique ou d'un mélange de solvants organiques appartenant aux familles de solvants suivantes :

- les hydrocarbures aromatiques (apolaires aprotiques) : benzène, toluène, éthylbenzène, xylène ;
- les hydrocarbures chlorés (polaires aprotiques) : chlorure de méthylène, chlorobenzène ;
- les éthers cycliques (polaires aprotiques) : tétrahydrofuranne, dioxane ;
- les esters (polaires) : acétate d'éthyle, acétate de cyclohexyle ;
- les cétones (polaires) : méthyl éthyl cétone, cyclohexanone.

Un solvant chloré pourra être utilisé s'il n'interagit pas ou très peu avec le sel de palladium ou le composé (I) de façon à ne pas donner de radicaux parasites.

Les solvants organiques précités conviennent particulièrement bien lorsque les monomères à polymériser ou copolymériser sont des monomères acryliques (méthacrylates, acrylates, l'acrylonitrile) et vinylaromatiques tels que styréniques.

Dans certains cas, notamment dans la polymérisation du méthacrylate de n-butyle et du styrène, on pourra utiliser l'hexane et le cyclohexane et dans la polymérisation de l'acétate de vinyle et de l'acrylonitrile, on pourra utiliser le diméthylformamide, le diméthylsulfoxyde, l'acétonitrile ou l'acétone.

D'une manière générale, le procédé de polymérisation et de copolymérisation suivant l'invention se déroule d'une manière identique pour l'homopolymérisation et la copolymérisation statistique. Pour la préparation de copolymères séquencés y compris les copolymères séquencés en étoile, les conditions expérimentales peuvent changer lors de l'addition d'un monomère différent du premier après la polymérisation du premier monomère. Par exemple, on peut faire varier la température dans un sens ou dans l'autre, le seconde dose pouvant être ajoutée avec un solvant. Pour la préparation de macromonomères ou de polymères $\alpha,\omega$ fonctionnalisés (téléchéliques), on pourrait envisager le même type de variation de conditions expérimentales.

Comme monomères polymérisables et copolymérisables en présence du système d'amorçage de polymérisation ou copolymérisation proposé, on peut citer les monomères (méth)acryliques et vinyliques (vinylaromatiques, esters vinyliques comme acétate de vinyle ; chlorure de vinyle).

Le système d'amorçage selon l'invention convient aussi pour la (co)polymérisation de monomères oléfiniques, éventuellement fluorés, comme l'éthylène, le butène, l'hexène, le 1-octène. Il convient aussi pour la (co)polymérisation de monomères à doubles liaisons conjuguées, tels que butadiène et isoprène.

Par monomère acrylique au sens de la présente invention, on entend un monomère choisi parmi les acrylates d'alkyle primaire, secondaire ou tertiaire, dont le groupe alkyle, le cas échéant substitué par exemple par au moins un atome d'halogène, tel que fluor, et/ou au moins un groupe hydroxyle, contient 1 à 18 atomes de carbone, en mentionnant plus particulièrement l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le groupe alkyle, le cas échéant substitué, par exemple par au moins un atome d'halogène comme le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Suivant l'invention, il a été constaté que, par une combinaison judicieuse d'un complexe de métal tel que défini précédemment, et d'un composé générateur de radicaux de polymérisation, on peut arriver à obtenir des homopolymères et des copolymères séquencés et statistiques parfaitement définis et contrôlés ainsi que des copolymères étoilés et des macromonomères et des polymères $\alpha,\omega$ fonctionnalisés (téléchéliques) qui n'ont jusqu'ici pu être synthétisé avec les procédés de polymérisation radicalaire classiques.

L'invention concerne donc également les polymères ou copolymères tels qu'obtenus par le procédé précité, de masses moléculaires contrôlées et de polymolécularité étroite.

Les polymères et copolymères de monomères (méth)acryliques, vinyliques tels qu'obtenus par le procédé de l'invention présentent des masses moléculaires Mn se situant entre 400 et 10 000 000 g/mole et une polymolécularité $\overline{Mw}/\overline{Mn}$ particulièrement étroite, inférieure à 2, généralement inférieure à 1,5, et particulièrement comprise entre 1,05 et 1,5. Dans le cadre de la polymérisation radicalaire, ceci constitue un progrès important puisqu'il y a encore peu de temps, il était impensable d'obtenir des distributions de masses moléculaires ou polymolécularités $\overline{Mw}/\overline{Mn}$ inférieures à 1,5. De plus, le procédé de l'invention est extrêmement régiosélectif, c'est-à-dire qu'il permet un excellent contrôle sur l'orientation des unités monomères lors de la propagation. D'autre part, les enchaînements s'orientent exclusivement tête à queue et non plus tête à tête comme cela pouvait être le cas en polymérisation radicalaire classique. Cela favorise las stabilité thermique des polymères et copolymères ainsi préparés. L'absence de réactions de terminaison élimine toute autre possibilité d'enchaînement tête à tête.

En comparaison avec les procédés de polymérisation et de copolymérisation radicalaires et ioniques connus, le procédé de la présente invention présente les avantages suivants :

- excellent contrôle moléculaire : $\overline{Mw}/\overline{Mn}$ étroit jusqu'à environ $\overline{Mw}/\overline{Mn}$ = 1,1 ; bonne corrélation entre le $\overline{Mn}$ théorique et le $\overline{Mn}$ expérimental en fonction du générateur de radicaux ; possibilité de préparation de copolymères séquencés y compris ceux en étoile ;
- conditions de température douces allant de 0°C à 130°C et pression ordinaire ;
- le temps de réaction dépend de la concentration du milieu réactionnel. En effet, plus la concentration en monomère est faible, plus la cinétique de polymérisation sera lente. En milieu concentré ([monomère]> 6 mole $1^{-1}$), la polymérisation peut être terminée en moins de deux heures. En milieu plus dilué, les polymérisations sont généralement arrêtées après 24 heures de réaction ;
- compatibilité en milieux aqueux car les catalyseurs utilisés ne se dégradent pas en présence d'eau. Possibilité de polymérisation en émulsion et suspension ;
- possibilité de stéréocontrôle, c'est-à-dire du contrôle de la tacticité hétéro, syndio ou isotactique, en utilisant des catalyseurs chiraux ;
- excellent contrôle de la synthèse des polymères ou copolymères obtenus dont les masses moléculaires varient

entre 400 et 10 000 000 g/mole ;

- la résistance à la dégradation thermique des polymères et copolymères est améliorés en raison de l'absence de réactions de terminaison (combinaisons et disproportionations), pouvant être montrée notamment par analyse thermogravimétrique ;
- obtention de nouveaux produits difficilement accessibles par les techniques de polymérisation usuelles, tels que copolymères séquencés purs, copolymères statistiques définis et polymères hyperbranchés utilisables comme adhésifs de formulation contrôlée, additifs antichocs, agents émulsifiants, agents interfaciaux.

On donne ci-après des exemples non limitatifs décrivant la préparation de polymères tels qu'obtenus suivant le procédé de la présente invention.

<u>Exemple 1</u>

<u>Polymérisation du méthacrylate de méthyle (MMA)</u>

On pèse, dans un ballon, 224 mg (1,0 x $10^{-3}$ mole) d'acétate de palladium [$Pd(OAc)_2$] et 1,048 g (4,0 x $10^{-3}$ mole) de triphénylphosphine (PPh3) préalablement recristallisée dans l'éthanol absolu. On met le ballon sous azote (purge vide-azote). On additionne 3,4 ml de toluène à l'aide d'une seringue purgée à l'azote. Le toluène est dégazé et distillé sur hydrure de calcium avant usage. On additionne 1,87 g de méthacrylate de méthyle (MMA) à l'aide d'une seringue purgée à l'azote. Le MMA a été auparavant dégazé et distillé sur hydrure de calcium. Il est conservé à -30°C à l'abri de la lumière. 15,4 mg (1,0 x $10^{-4}$ mole) de tétrachlorure de carbone sont additionnés en solution dans 1 ml de toluène à l'aide d'une seringue purgée à l'azote. Le ballon est placé dans un bain d'huile à la température de 70°C, pendant 24 heures, sous agitation magnétique. Le ballon est ensuite ouvert, et du toluène est additionné afin de diluer le mélange réactionnel qui est filtré, puis reconcentré sous vide. La solution de polymère ainsi obtenue est précipitée dans un non solvant tel que le méthanol ou l'heptane. Après filtration et lavage, le polymère est séché jusqu'à poids constant sous vide à 60°C.

On obtient le poly(méthacrylate de méthyle) (PMMA) avec un rendement de 76%.

$\overline{Mn}_{exp}$ = 16 000 g/mole (étalons de PMMA)
$\overline{Mn}_{théo}$ = 11 900 g/mole
$\overline{Mw}/\overline{Mn}$ = 1,8.

Ces dernières valeurs sont obtenues de la façon suivante. On effectue une chromatographie d'exclusion stérique (SEC) qui permet de séparer les macromolécules de PMMA suivant leur taille en solution (volume hydrodynamique). Elles sont alors éluées par un solvant (phase mobile de THF) du PMMA. Les plus grosses molécules sortent en premier et les plus petites en dernier en raison du parcours plus long dans les pores de la colonne (phase stationnaire). Des PMMA ou du polystyrène de masses absolues connues (déterminées par une autre technique) sont également injectées (étalons) et permettent d'obtenir une courbe d'étalonnage à partir de laquelle on détermine les masses moléculaires relatives ($\overline{Mn}_{exp}$) du polymère dont on veut connaître la taille et la distribution des masses ou polydispersité ($\overline{Mw}/\overline{Mn}$).

<u>Exemple 2</u>

<u>Polymérisation du MMA</u>

On procède comme dans l'Exemple 1, excepté que le toluène est remplacé par de l'eau.

| | |
|---|---|
| $Pd(OAc)_2$ | 224 mg (1,0 x $10^{-3}$ mole) |
| $PPh_3$ | 1,048 g (4,0 x $10^{-3}$ mole) |
| $H_2O$ | 3,4 ml |
| MMA | 1,87 g |
| $CCl_4$ | 15,4 mg (1,0 x $10^{-4}$ mole) |
| Durée de polymérisation | 24 heures |
| Température du bain d'huile | 70°C |

(suite)

| | |
|---|---|
| Rendement | 84% |
| $\overline{Mn}_{exp}$ | 23 000 moles (étalon de PMMA) |
| $\overline{Mn}_{théo}$ | 15 700 g/mole |
| $\overline{Mw}/\overline{Mn}$ | 1,4 |

Exemple 3

Polymérisation du MMA

On procède comme dans l'Exemple 1, excepté que l'on additionne l'acide de Lewis de formule :

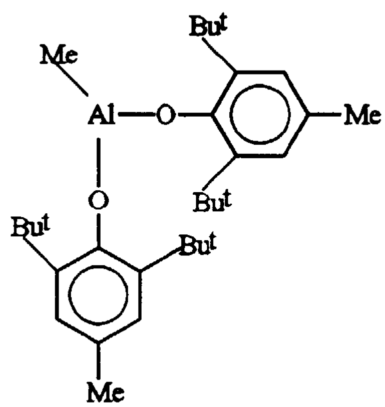

à l'aide d'une seringue purgée à l'azote, après avoir additionné le MMA dans le milieu réactionnel.

| | |
|---|---|
| $Pd(OAc)_2$ | 11,22 mg (5,0 x $10^{-5}$ mole) |
| $PPh_3$ | 52,4 mg (2,0 x $10^{-4}$ mole) |
| Toluène | 15,2 ml |
| MMA | 1,87 g |
| Acide de Lewis | 96,0 mg (2,0 x $10^{-4}$ mole) |
| $CCl_4$ | 15,4 mg (1,0 x $10^{-4}$ mole) |
| Durée de polymérisation | 24 heures |
| Température du bain d'huile | 20°C |
| Rendement | 38% |
| $\overline{Mn}_{exp}$ | 23 700 g/mole (étalon de PMMA) |
| $\overline{Mn}_{théo}$ | 7 100 g/mole |
| $\overline{Ww}/\overline{Mn}$ | 1,35 |
| Taux de PMMA syndiotactique | 70% |

Exemple 4

Polymérisation du MMA

On procède comme dans l'Exemple 1, excepté que l'acétate de palladium et la triphénylphosphine sont remplacés par le complexe $Pd(PPh_3)_4$.

| | |
|---|---|
| $Pd[PPh_3]_4$ | 1,155 g (1,0 x $10^{-3}$ mole) |
| Toluène | 3,4 ml |
| MMA | 1,87 g |
| $CCl_4$ | 15,4 mg (1,0 x $10^{-4}$ mole) |
| Durée de polymérisation | 24 heures |
| Température du bain d'huile | 70°C |
| Rendement | 60% |
| $\overline{Mn}_{exp}$ | 30 000 g/mole (étalon de PMMA) |
| $\overline{Mn}_{théo}$ | 11 200 g/mole |
| $\overline{Mw}/\overline{Mn}$ | 1,45 |

Exemples 5 à 9

Dans les conditions expérimentales décrites dans l'Exemple 1, on a fait varier le rapport molaire du MMA au $CCl_4$. Dans le Tableau 1 ci-après, sont données les valeurs de $\overline{Mn}$ expérimentales en fonction des valeurs de $\overline{Mn}$ théoriques, déterminées par la relation :
[$\overline{Mn}_{théo}$ = [MMA]/[$CCl_4$] x Conversion x Masse molaire du MMA.

Tableau 1

| Exemple | Rapport molaire [MMA]/[$CCl_4$] | Rendement (%) | $\overline{Mn}_{théo}$ (g/mole) | $\overline{Mn}_{exp}$ (g/mole) |
|---|---|---|---|---|
| 5 | 180 | 64 | 11 500 | 16 000 |
| 6 | 487 | 94 | 45 800 | 68 000 |
| 7 | 974 | 78 | 76 000 | 66 000 |
| 8 | 1398 | 70 | 98 000 | 109 000 |
| 9 | 1950 | 61 | 119 000 | 117 000 |

On constate que la $\overline{Mn}_{exp}$ évolue sensiblement linéairement avec la $\overline{Mn}_{théo}$.

Exemple 10

Dans les conditions expérimentales décrites dans l'Exemple 1, des durées de polymérisation variables ont été utilisées. Les résultats sont rapportés dans le Tableau 2.

Tableau 2

| Durée de polymérisation (heures) | Taux de conversion (%) | $\overline{Mn}_{exp}$ (g/mole) |
|---|---|---|
| 0,5 | 44 | 11 000 |
| 1 | 55 | 16 000 |
| 2 | 68 | 18 000 |
| 263 | 77 | 25 000 |

La masse $\overline{Mn}_{exp}$ varie sensiblement linéairement avec la conversion.

Exemple 11

On procède comme dans l'Exemple 1, excepté que l'on opère à 50°C et qu'après 24 heures de polymérisation, 1,87 g de MMA sont à nouveau additionnés au mélange réactionnel. Après 24 heures sous agitation magnétique, le polymère est précipité conformément au mode opératoire de l'Exemple 1.

| | | |
|---|---|---|
| $Pd(OAc)_2$ | | 224 mg (1,0 x $10^{-3}$ mole) |
| $PPh_3$ | | 1,048 g (4,0 x $10^{-3}$ mole) |
| Toluène | | 8,4 ml |
| MMA | | deux additions de 1,87 g |
| $CCl_4$ | | 15,4 mg (1,0 x $10^{-4}$ mole) |
| Durée de polymérisation | | deux fois 24 heures |
| Température du bain d'huile | | 50°C |
| Avant reprise | Rendement | 75% |
| | $\overline{Mn}_{exp}$ | 34 500 g/mole (étalon de PMMA) |
| | $\overline{Mw}/\overline{Mn}$ | 1,4 |
| Après reprise | Rendement | 60% |
| | $\overline{Mn}_{exp}$ | 48 600 g/mole (étalon de PMMA) |
| | $\overline{Mw}/\overline{Mn}$ | 1,8 |

On constate que la masse moléculaire $\overline{Mn}_{exp}$ a augmenté après addition de monomère frais.

L'exemple 11 montre que la polymérisation du MMA, amorcée par le système selon l'invention, est une polymérisation vivante.

Exemple 12

On procède comme dans l'exemple 11, excepté qu'après 3 heures de polymérisation, on additionne une suspension du mélange acétate de palladium et triphénylphosphine dans le toluène contenant du méthacrylate de n-butyle (nBuMA).

| | Première séquence : polymérisation du MMA | Deuxième séquence : copolymérisation du polymère précédent avec le nBuMA |
|---|---|---|
| $Pd(OAc)_2$ | 224 mg (1,0 x $10^{-3}$ mole) | 224 mg (1,0 x $10^{-3}$ mole) |
| $PPh_3$ | 1,048 g (4,0 x $10^{-3}$ mole) | 1,048 g (4,0 x $10^{-3}$ mole) |
| Toluène | 1,2 ml | 1,0 ml |
| MMA | 1 ml (0,936 g) | |
| $CCl_4$ | 15,4 mg (1,0 x $10^{-4}$ mole) | |
| nBuMA | | 1 ml (6,3 x $10^{-3}$ mole) |
| Durée | 3 h | 24 h |
| Température du bain d'huile | 50°C | 50°C |
| Conversion | 69% | 73% |
| $\overline{Mn}_{exp}$ | 19 200 g/mole | 27 300 g/mole |
| $\overline{Mw}/\overline{Mn}$ | 1,5 | 1,7 |

Le rapport des séquençages dans le copolymère, déterminé par RMN $^1H$, est de 65% de PMMA / 35% de PnBuMA.

Exemple 13

Polymérisation du MMA

On procède comme dans l'Exemple 1, excepté que l'on remplace $PPh_3$ par le (4S,5S)-(+)-O-isopropylidène-2,3-dihydroxy-1,4-bis(diphénylphosphino)butane ((S,S)-DIOP).

| | |
|---|---|
| $Pd(OAc)_2$ | 22,4 mg (1,0 x $10^{-4}$ mole) |
| (S,S)-DIOP | 99,7 mg (2,0 x $10^{-4}$ mole) |
| Toluène | 1,7 ml |
| MMA | 0,749 g (7,48 x $10^{-3}$ mole) |
| $CCl_4$ | 1,54 mg (1,0 x $10^{-5}$ mole) |
| Durée de polymérisation | 24 h |
| Température du bain d'huile | 70°C |
| Rendement | 71% |
| $\overline{Mn}_{exp}$ | 47 000 g/mole (étalons de PMMA) |
| $\overline{Mn}_{théo}$ | 53 100 g/mole |
| $\overline{Mw}/\overline{Mn}$ | 2,3 |

Exemple 14

Polymérisation du MMA

On procède comme dans l'Exemple 1, excepté que l'on remplace $PPh_3$ par le (R)-(+)-2,2'-bis(diphénylphosphino)-1,1'-binaphtyl ((R)-BINAP).

| | |
|---|---|
| $Pd(OAc)_2$ | 22,4 mg (1,0 x $10^{-4}$ mole) |
| (R)-BINAP | 124,5 mg (2,0 x $10^{-4}$ mole) |
| Toluène | 1,7 ml |
| MMA | 0,749 g (7,48 x $10^{-3}$ mole) |
| $CCl_4$ | 1,54 mg (1,0 x $10^{-5}$ mole) |
| Durée de polymérisation | 24 h |
| Température du bain d'huile | 70°C |
| Rendement | 42% |
| $\overline{Mn}_{exp}$ | 26 400 g/mole (étalons de PMMA) |
| $\overline{Mn}_{théo}$ | 31 400 g/mole |
| $\overline{Ww}/\overline{Mn}$ | 2,2 |

Exemple 15

On procède comme dans l'Exemple 1, excepté que l'on remplace $PPh_3$ par la tris(4-méthoxyphényl)phosphine.

| | |
|---|---|
| $Pd(OAc)_2$ | 56 mg (2,5 x $10^{-4}$ mole) |
| $P(pMeOC_6H_4)_3$ | 352 mg (1,0 x $10^{-3}$ mole) |
| Toluène | 1,95 ml |
| MMA | 0,936 g (9,36 x $10^{-3}$ mole) |

(suite)

| | |
|---|---|
| $CCl_4$ | 3,85 mg (2,5 x $10^{-5}$ mole) |
| Durée de polymérisation | 24 h |
| Température du bain d'huile | 70°C |
| Rendement | 100% |
| $\overline{Mn}_{exp}$ | 36 700 g/mole (étalons de PMMA) |
| $\overline{Mn}_{théo}$ | 37 400 g/mole |
| $\overline{Mw}/\overline{Mn}$ | 1,8 |

Exemple 16

Polymérisation du MMA

On procède comme dans l'Exemple 1, excepté que l'on remplace $CCl_4$ par $CCl_3$-CCl(Me)$CO_2$Me.

| | |
|---|---|
| $Pd(OAc)_2$ | 224 mg (1,0 x $10^{-3}$ mole) |
| $PPh_3$ | 1,048 g (4,0 x $10^{-3}$ mole) |
| Toluène | 3,4 ml |
| MMA | 1,872 g (18,72 x $10^{-3}$ mole) |
| $CCl_3$-CCl(Me)$CO_2$Me | 23,99 mg (1,0 x $10^{-4}$ mole) |
| Durée de polymérisation | 24 h |
| Température du bain d'huile | 70°C |
| Rendement | 100% |
| $\overline{Mn}_{exp}$ | 20 400 g/mole (étalons de PMMA) |
| $\overline{Mn}_{théo}$ | 18 500 g/mole |
| $\overline{Mw}/\overline{Mn}$ | 1,77 |

Exemple 17

On procède comme dans l'Exemple 2 (polymérisation en milieu aqueux), excepté que la polymérisation est conduite en présence de l'agent tensio-actif monooléate de sorbitane et de polyéthylène glycol, commercialisé par la Société "ICI" sous la dénomination "Tween® 80".

| | |
|---|---|
| $Pd(OAc)_2$ | 224 mg (1,0 x $10^{-3}$ mole) |
| $PPh_3$ | 1,048 g (4,0 x $10^{-3}$ mole) |
| Eau | 6,3 ml |
| Tween® 80 | 189 mg |
| MMA | 1,872 g (18,72 x $10^{-3}$ mole) |
| $CCl_4$ | 15,4 mg (1,0 x $10^{-4}$ mole) |
| Durée de polymérisation | 24 h |
| Température du bain d'huile | 70°C |
| Rendement | 86% |
| $\overline{Mn}_{exp}$ | 33 500 g/mole (étalons de PMMA) |
| $\overline{Mn}_{théo}$ | 16 100 g/mole |

(suite)

| | |
|---|---|
| $\overline{Mw}/\overline{Mn}$ | 1,54 |

## Revendications

1. Procédé de polymérisation ou copolymérisation radicalaire contrôlée de monomères (méth)acryliques et/ou vinyliques, caractérisé par le fait que l'on polymérise ou copolymérise en masse, solution, émulsion ou suspension, à une température pouvant descendre jusqu'à 0°C, au moins un desdits monomères en présence d'un système d'amorçage comprenant :

   - au moins un composé générateur de radicaux autre que le bromofluorène ; et
   - au moins un catalyseur constitué par un complexe du palladium au degré d'oxydation 0, représenté par la formule suivante (I) :

   $$Pd(0)L^1L^2L^3L^4$$

   dans laquelle $L^1$, $L^2$, $L^3$ et $L^4$, identiques ou différents, représentent chacun un ligand, pouvant être un ligand chiral, qui est choisi parmi PRR'R", P(OR) (OR') (OR"), NRR'R", ORR', SRR', SeRR', AsRR'R", SbRR'R", où chaque R, R', R" représente indépendamment un groupe alkyle en $C_1$-$C_{14}$, éventuellement substitué, ou un groupe aromatique éventuellement substitué, au moins deux de ces ligands pouvant être reliés entre eux par un ou plusieurs radicaux bivalents.

2. Procédé selon la revendication 1, caractérisé par le fait que $L^1$, $L^2$, $L^3$ et $L^4$ représentent chacun une phosphine PRR'R", R, R', R" représentant chacun indépendamment un groupe alkyle en $C_1$-$C_{14}$ pouvant être substitué par $SO_3^-$, COOH, alcoxy, alkyl-S- ou un groupe aromatique pouvant être substitué par au moins un groupement choisi notamment parmi halogène, alkyle, $CF_3$, alcoxy, $NO_2$, $SO_3^-$, au moins deux de ces ligands pouvant être reliés pour former une polyphosphine, laquelle peut contenir au moins un hétéroatome, tel que N, P, S et O.

3. Procédé selon l'une des revendications 1 et 2, caractérisé par le fait que l'on utilise, comme ligand, la triphénylphosphine, la tris(4-méthoxyphényl)phosphine, le (4S,5S)-(+)-O-isopropylidène-2,3-dihydroxy-1,4-bis(diphénylphosphino)butane ou le (R)-(+)-2,2'-bis(diphénylphosphino)-1,1'-binaphtyl.

4. Procédé selon la revendication 3, caractérisée par le fait que le catalyseur est $Pd(O)[PPh_3]_4$.

5. Procédé selon l'une des revendications 1 à 4, caractérisé par le fait que le complexe de formule (I) est formé un situ dans le milieu réactionnel à partir d'un sel de palladium (II) et des ligands $L^1$, $L^2$, $L^3$ et $L^4$, ou à partir d'un complexe du palladium (II) formé avec une partie des ligands $L^1$ $L^2$ $L^3$ $L^4$ et de l'autre partie desdits ligands.

6. Procédé selon la revendication 5, caractérisé par le fait que l'on choisit le sel de palladium (II) parmi $PdCl_2$, $PdBr_2$, $PdI_2$ et les sels de palladium et d'acides organiques, tels que $Pd(OAc)_2$, et le complexe de palladium (II), parmi ceux de formule :

   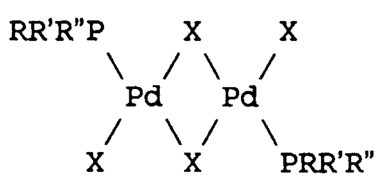

   où :

   - R, R' et R" sont tels que définis à la revendication 1 ; et
   - X représente un halogène.

**7.** Procédé selon l'une des revendications 1 à 6, caractérisé par le fait que le composé générateur de radicaux libres est monofonctionnel et choisi dans les classes des composés suivants :

(a) les dérivés de formule :

$$CYZ_3$$

où :

- Y = Cl, Br, I, F ou H ; et
- Z = Cl ou Br ;

(b) les dérivés de formule :

$$R^1CCl_3$$

où $R^1$ représente phényle ; benzyle ; benzoyle ; alcoxycarbonyle ; 1-chloro 1-éthoxycarbonyléthyle ; $R^2CO$ avec $R^2$ représentant alkyle en $C_1$-$C_{14}$ ou aryle ; alkyle ; mésityle ; trifluorométhyle ; ou nitro ;
(c) les dérivés de formule :

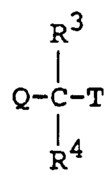

dans laquelle :

- Q représente un atome de chlore ou de brome ou un groupe acétate ou trifluoroacétate ou triflate ;
- $R^3$ représente un atome d'hydrogène, un groupe alkyle en $C_1$-$C_{14}$ ou un groupe aromatique, ou un groupe $-CH_2OH$ ;
- T représente un groupe

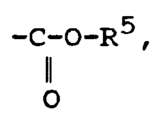

avec $R^5$ représentant hydrogène ou un groupe alkyle ou aromatique; un groupe CN ; un groupe

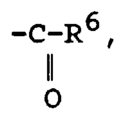

avec $R^6$ représentant alkyle en $C_1$-$C_{14}$, phényle ou isocyanate ; un groupe hydroxyle ; un groupe nitro ; un groupe amino substitué ou non ; un groupe alcoxy en $C_1$-$C_{14}$ ; un groupe $R^7CO$, avec $R^7$ représentant alkyle en $C_1$-$C_{14}$ ou aryle ;
- $R^4$ représente un groupe entrant dans les définitions de $R^3$ ou de Q ou un groupe fonctionnel tel qu'hydroxyle, nitro, amino substitué ou non, alcoxy en $C_1$-$C_{14}$, acyle, acide carboxylique, ester ;

(d) les composés lactones ou lactames halogénés en $\alpha$ ;
(e) les N-halosuccinimides et les N-halophtalimides ;

(f) les halogénures d'alkyl-sulfonyle et les halogénures d'arène-sulfonyle ;
(g) les composés de formule :

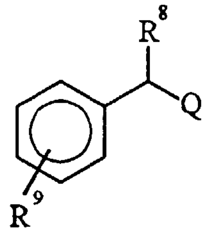

où :

- $R^8$ représente un atome d'hydrogène, un groupe alkyle en $C_1$-$C_{14}$ ou un groupe acide carboxylique, ester, nitrile ou cétone ;
- $R^9$ représente un atome d'hydrogène ou un groupe alkyle en $C_1$-$C_{14}$, hydroxyle, acyle, amine substituée ou non, nitro, alcoxy en $C_1$-$C_{14}$ ou sulfonate ; et
- Q a la signification donnée précédemment ;

(h) les composés de formule :

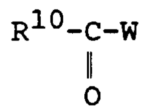

où :

- $R^{10}$ représente alkyle en $C_1$-$C_{14}$ ou aryle ;
- W représente halogène ou pseudohalogénure ;

(i) les composés de formule : où :

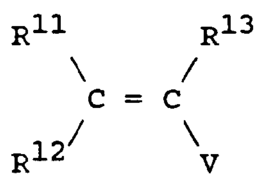

- $R^{11}$, $R^{12}$ et $R^{13}$ représentent chacun indépendamment alkyle en $C_1$-$C_{14}$ ou aryle ; et
- V représente halogène, acétate, trifluoroacétate, triflate ;

(j) les halogénures aromatiques de formule :

Ar - U

où :

- Ar représente un groupement aromatique, tel que $C_6H_5$- pouvant être substitué en position ortho, méta ou para par un groupement électroattracteur ou électrodonneur ; et
- U représente un halogène.

**8.** Procédé selon l'une des revendications 1 à 6, caractérisé par le fait que le composé générateur de radicaux est multifonctionnel et est constitué par au moins deux groupements générateurs de radicaux monofonctionnels des

classes (c) à (j) définies à la revendication 7, reliés par une chaîne d'unités méthylène ou par un cycle benzénique, ou est choisi parmi les anhydrides acétiques comme l'anhydride d'acide chloroacétique et l'anhydride d'acide chlorodifluoroacétique, et les tri- ou tétrahalométhanes et les dérivés trichlorométhylés des classes (a) et (b) définies à la revendication 7.

**9.** Procédé selon la revendication 7, caractérisé par le fait que le composé générateur de radicaux est le tétrachlorure de carbone, le trichloroacétate d'éthyle, le bromure d'isobutyrate d'éthyle, ou le 2-chloro 2-trichlorométhyl propionate de méthyle.

**10.** Procédé selon l'une des revendications 1 à 9, caractérisé par le fait que l'on conduit la polymérisation en présence d'au moins un activateur choisi parmi les bases et les acides de Lewis.

**11.** Procédé selon l'une quelconque des revendications 1 à 10, caractérisé par le fait que le rapport molaire du ou des monomères sur le ou les composés générateurs de radicaux est de 1 - 100 000.

**12.** Procédé selon l'une des revendications 1 à 11, caractérisé par le fait que le rapport molaire du palladium sur le (ou les) générateur(s) de radicaux est de 0,01 à 100.

**13.** Procédé selon l'une quelconque des revendications 5 à 12, caractérisé par le fait que le rapport molaire du sel de palladium (II) sur le ligand est de 0,05 à 20.

**14.** Procédé selon l'une quelconque des revendications 1 à 13, caractérisé par le fait que le polymérisation ou copolymérisation est effectuée à une température de 0°C à 130°C.

**15.** Procédé selon l'une quelconque des revendications 1 à 14, caractérisé par le fait que les monomères polymérisables ou copolymérisables comprennent au moins un monomère choisi parmi les méthacrylates, les acrylates, les dérivés vinylaromatiques, l'acétate de vinyle et le chlorure de vinyle.

**16.** Procédé selon la revendication 15, caractérisé par le fait que le monomère est choisi dans le groupe comprenant le méthacrylate de méthyle, le méthacrylate d'éthyle, le méthacrylate de n-butyle, l'acrylonitrile et le styrène.

**17.** Procédé selon l'une des revendications 1 à 16, caractérisé par le fait qu'on conduit une copolymérisation séquencée en introduisant, dans le milieu de polymérisation dans lequel le premier monomère a été polymérisé, un second monomère le cas échéant avec un nouvel ajout de système d'amorçage.

**18.** Procédé selon l'une des revendications 1 à 17, caractérisé par le fait que l'on conduit la polymérisation ou la copolymérisation en milieu aqueux, soit en suspension, soit en émulsion en présence d'au moins un émulsifiant.

**19.** Procédé selon la revendication 18, caractérisé par le fait que l'on choisit le ou les émulsifiants parmi les surfactants anioniques, tels que le dodécylbenzène sulfonate de sodium, le dodécyl sulfate de sodium, le lauryl sulfate de sodium et leurs mélanges, ou du type neutre comme les esters de glycol, les esters de sorbitane et de polyéthylène glycol, les esters d'acides gras et de polyéthylène glycol et les éthers d'alcool gras et de polyéthylène glycol.

**20.** Procédé selon l'une des revendications 1 à 17, caractérisé par le fait que l'on conduit la polymérisation ou la copolymérisation en présence d'un solvant organique ou d'un mélange de solvants organiques appartenant aux familles de solvants suivantes : hydrocarbures aromatiques, hydrocarbures chlorés, éthers cycliques, esters et cétones.

**21.** Polymères ou copolymères obtenus par un procédé tel que défini à l'une quelconque des revendications 1 à 20, caractérisés par le fait qu'ils ont une masse moléculaire $\overline{Mn}$ entre 400 et 10 000 000 g/mole et une polymolécularité $\overline{Mw}/\overline{Mn}$ inférieure à 2.

Office européen des brevets

# RAPPORT DE RECHERCHE EUROPEENNE

Numéro de la demande
EP 97 40 0600

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | TAKAYUKI OTSU: "NEW INITIATOR SYSTEMS FOR RADICAL POLYMERIZATION OF VINYL MONOMERS" JOURNAL OF POLYMER SCIENCE, PART B, POLYMER LETTERS, vol. 5, no. 8, août 1967, pages 697-701, XP002028806 --- | | C08F4/00 |
| A | EP 0 265 091 A (E.I. DU PONT DE NEMOURS AND CO.) --- | | |
| A | US 4 145 486 A (W.O.HAAG) ----- | | |
| | | | **DOMAINES TECHNIQUES RECHERCHES (Int.Cl.6)** |
| | | | C08F |

Le présent rapport a été établi pour toutes les revendications

| Lieu de la recherche | Date d'achèvement de la recherche | Examinateur |
|---|---|---|
| LA HAYE | 13 novembre 1997 | Cauwenberg, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)